# EUROPÄISCHE PATENTANMELDUNG

(11) **EP 2 832 485 A2**
(43) Veröffentlichungstag der Anmeldung: **04.02.2015**
(21) Anmeldenummer: 14165150.5
(22) Anmeldetag: 17.04.2014
(51) Int. Cl.: B23F 19/10

(54) **Verzahnmaschine**

(30) Priorität: 01.08.2013 DE 102013012824
(71) Anmelder: Liebherr-Verzahntechnik GmbH, 87437 Kempten (DE)
(72) Erfinder: Küchle, Bernd, 8775 Winterrieden (DE); Volk, Roland, 87487 Wiggensbach (DE); Kluge, Michael, 87437 Kempten (DE)
(74) Vertreter: Laufhütte, Dieter

(57) **Zusammenfassung**

Bei der Erfindung handelt es sich um ein Verzahnmaschine mit mindestens einem Maschinentisch, an welchem eine Werkstückspindel zur Aufnahme eines Werkstückes angeordnet ist, wobei die Werkstückspindel über einen Antrieb um eine Rotationsachse antreibbar ist, und mit einer Werkzeugaufnahme für ein Anfas- und/oder Entgratwerkzeug zum Anfasen und/oder Entgraten eines in der Werkstückspindel aufgenommenen vorverzahnten Werkstückes, wobei das Anfas- und/oder Entgratwerkzeug über mindestens einen Aktor der Verzahnmaschine an das Werkstück zustellbar ist, gekennzeichnet durch eine Gegenkraftvorrichtung, welche an dem Maschinentisch und/oder der Werkstückspindel angreift und über mindestens einem Aktor eine Gegenkraft erzeugt, welche die durch die Zustellung des Entgratwerkzeuges an das Werkstück auf den Maschinentisch und/oder die Werkstückspindel wirkende Kraft zumindest teilweise ausgleicht.

## Beschreibung

Die vorliegende Erfindung betrifft eine Verzahnmaschine mit mindestens einem Maschinentisch, an welchem eine Werkstückspindel zur Aufnahme eines Werkstückes angeordnet ist, wobei die Werkstückspindel über einen Antrieb um eine Rotationsachse antreibbar ist, und mit einer Werkzeugaufnahme für ein Anfas- und / oder Entgratwerkzeug zum Anfasen und / oder Entgraten eines in der Werkstückspindel aufgenommenen vorverzahnten Werkstückes, wobei das Anfas- und / oder Entgratwerkzeug über mindestens einen Aktor der Verzahnmaschine an das Werkstück zustellbar ist.

Insbesondere betrifft die vorliegende Erfindung dabei eine Verzahnmaschine mit mindestens zwei Werkstückspindeln, bei denen auf wenigstens einer Werkstückspindel ein Anfas- und / oder Entgratvorgang für ein vorverzahntes Werkstücks stattfindet.

Bei der Herstellung von verzahnten Werkstücken entsteht, wie bei jeder spanenden Bearbeitung, an der Austrittkante des Werkzeuges aus dem Werkstück ein Grat, der üblicherweise durch eine Entgratvorrichtung mechanisch entfernt wird. Zusätzlich werden die Kanten einer Verzahnung häufig noch mit einer Schutzfase versehen.

Dieses Anfasen und Entgraten führt man aus mehreren Gründen durch. Zunächst müssen die scharfen Grate entfernt werden, um Verletzungen beim Handling der Teile zu vermeiden. Des Weiteren könnten Grate im zusammengebauten Getriebe abbrechen und anschließend zu einem vorzeitigen Ausfall des Getriebes durch Verzahnungsschäden, wie zum Beispiel Oberflächendefekte auf den Zahnflanken, die bis zum Zahnbruch führen können, verursachen.

Angefast werden die Werkstücke um eine Schutzfase an den Zahnkanten, für die anschließende Weiterverarbeitung, zu erzeugen. Diese Schutzfasen verhindern Schäden auf den Zahnflanken im Kantenbereich der Verzahnung, wenn die Zahnkanten z.B. irgendwo angestoßen werden. Weiterhin wird durch diese Fasen verhindert, dass es im Wärmebehandlungsverfahren der Verzahnungen zu Härterissen an den scharfen Zahnkanten kommen kann.

Diese Anfas- und Entgratprozesse finden bei Maschinen nach dem Stand der Technik häufig innerhalb der Verzahnmaschine statt. Diese Maschinen sind teilweise so ausgeführt, das sie zwei Werkstückspindeln zur Aufnahme von Werkstücken auf einem gemeinsamen Spindelträger besitzen um möglichst effektiv und Hauptzeitparallel diese Anfas- und Entgratprozesse durchzuführen. Bei manchen Prozessen wir das angefaste und entgratete Werkstück noch einmal nachgefräst.

Werden die Fasen mit einem Wälzentgratverfahren erzeugt, wird ein spezielles Anfas-/Entgratwerkzeug radial an das verzahnte Werkstück gedrückt und das Werkzeug wälzt mit dem Werkstück aufeinander ab und erzeugt dabei die gewünschten Fasen in einer oder mehrerer Überrollungen. Dabei handelt es sich um ein Umformverfahren. Das Werkzeug berührt, in seiner einfachsten Ausführungsform, das Werkstück nur im Bereich der Fasen an den Zahnflanken. Durch einen Umformprozess wird das Material im Bereich der zukünftigen Fase in die Zahnflanke und in Richtung der Stirnflächen der Verzahnung verdrängt.

Material, das in Richtung der Stirnflächen der Verzahnung verdrängt wird, muss in einen anschließenden Entgratprozess abgeschert werden. Material in den Zahnflanken wird entweder mit einem speziellen Glättrad in die Zahnflanke eingedrückt oder in einem anschließenden Zahnradbearbeitungsprozess mechanisch entfernt (z.B. Fräsen, Schaben,...).

Bedingt durch das Umformverfahren muss, in Abhängigkeit von der Fasengröße, das Wälzentgratwerkzeug mit unterschiedlich starkem Druck radial gegen das Werkstück gedrückt werden. Liegen nun die Werkstückspindeln auf einem gemeinsamen Spindelträger, kann das Wälzentgratverfahren den anderen Bearbeitungsprozess negativ beeinflussen.

Eine solche Werkzeugmaschine zum Wälzentgraten ist beispielsweise aus der DE 10 2006 019 325 bekannt. Die Anwendung des Anfas- und Entgratverfahrens (Wälzentgraten) dazu wird in der DE 10 2006 044 738 beschrieben.

In der DE 10 2006 044 738 wird zur Kompensation der Drückkraft auf das Werkstück mit zwei Werkzeugen gearbeitet, die radial, von zwei sich gegenüberliegenden Seiten, auf das Werkstück drücken und so das Moment auf die Werkstückspindel, wie es aus einer einseitigen Druckkraft auf das Werkstück herrühren kann, aufnehmen.

Hierzu müssen jedoch zwei Wälzentgratwerkzeuge (Anfaswerkzeuge) verwendet werden, so dass je Werkstücktyp jeweils zwei Werkzeuge gleicher Bauart beschafft werden müssen. Diese Werkzeuge sind jedoch relativ teuer. Wird nur ein Wälzentgratwerkzeug und ein Schneidwerkzeug verwendet, können durch das Schneidwerkzeug die Kräfte nur bedingt aufgenommen werden und das Moment wird nur teilweise kompensiert.

Aufgabe der vorliegenden Erfindung ist es daher, eine Verzahnmaschine zur Verfügung zu stellen, bei welcher ein negativer Einfluss einer Anfas- und / oder Entgratbearbeitung auf die Verzahnqualität verhindert wird.

Diese Aufgabe wird erfindungsgemäß durch eine Verzahnmaschine gemäß Anspruch 1 gelöst.

Die vorliegende Erfindung zeigt dabei eine Verzahnmaschine mit mindestens einem Maschinentisch, an welchem eine Werkstückspindel zur Aufnahme eines Werkstückes angeordnet ist, wobei die Werkstückspindel über einen Antrieb um eine Rotationsachse antreibbar ist. Die Verzahnmaschine weist weiterhin eine Werkzeugaufnahme für ein Anfas- und / oder Entgratwerkzeug zum Anfasen und / oder Entgraten eines in der Werkstückspindel aufgenommenen vorverzahnten Werkstückes auf. Dabei ist das Anfas- und / oder Entgratwerkzeug über mindestens einen Aktor der Verzahnmaschine an das Werkstück zustellbar. Erfindungsgemäß ist dabei eine Gegenkraftvorrichtung vorgesehen, welche an dem Maschinentisch und / oder an der Werkstückspindel angreift und über mindestens einen Aktor eine Gegenkraft erzeugt, welche die durch die Zustellung des Entgratwerkzeuges an das Werkstück auf den Maschinentisch und / oder die Werkstückspindel wirkende Kraft zumindest teilweise ausgleicht.

Die erfindungsgemäß vorgesehene Gegenkraftvorrichtung erlaubt damit in besonders einfacher Weise, negative Einflüsse, welche durch die Zustellung des Entgratwerkzeuges an das Werkstück auftreten können, zu verhindern, indem eine entsprechende Gegenkraft auf den Maschinentisch und / oder die Werkstückspindel aufgebracht wird. Anders als im Stand der Technik wird damit kein zweites Anfas- und / oder Entgratwerkzeug benötigt.

Die Gegenkraft wird dabei erfindungsgemäß nicht auf das Werkstück selbst aufgebracht, sondern auf die Werkstückspindel und / oder den Maschinentisch, an welchem die Werkstückspindel gelagert ist. Dies ergibt neben dem einfachen Aufbau auch einen besseren Ausgleich der hier wirkenden Kräfte. Durch diesen Aufbau bedingt können die Wirkelemente für die Gegenkraft außerhalb des schwerkraftbedingten Späneflugbereiches auf den Maschinentisch und/oder die Werkstückspindel einwirken. Wenn das zweite Entgratwerkzeug aonsonsten unterhalb des ersten Entgratwerkzeuges angeordnet ist, besteht die Gefahr das Späne aus dem oberen Entgratprozess auf das untere Werkzeug fallen und anschließend in die Zahnflanke des Werkstückes eingedrückt werden können und so die Verzahnung beschädigen.

Die erfindungsgemäße Verzahnmaschine kann in einer möglichen Ausführungsform ausschließlich zum Anfasen und / oder Entgraten von vorverzahnten Werkstücken eingesetzt werden. Vorteilhafterweise werden auf der Verzahnmaschine jedoch auch noch weitere Bearbeitungsschritte, und insbesondere eine Hauptverzahnbearbeitung, durchgeführt.

Bevorzugt wird die erfindungsgemäße Verzahnmaschine dabei mit Anfas- und / oder Entgratwerkzeugen eingesetzt, welche zumindest auch durch eine Materialumformung wirken. Insbesondere handelt es sich dabei bei dem erfindungsgemäß eingesetzten Anfas- und / oder Entgratwerkzeug um ein Wälzentgratwerkzeug. Dieses wird wie bereits eingangs beschrieben auf der zu entgratenden und / oder anzufasenden Kante des vorverzahnten Werkstückes abgewälzt.

Weiterhin kann erfindungsgemäß das Anfas- und / oder Entgratwerkzeug durch den Aktor zumindest auch in radialer Richtung zur Rotationsachse der Werkstückaufnahme an das Werkstück heranfahrbar und / oder gegen das Werkstück drückbar sein.

Insbesondere werden die Fasen dabei über ein spezielles Anfas- und / oder Entgratwerkzeug erzeugt, welches radial an das verzahnte Werkstück gedrückt wird, wobei das Werkzeug und das Werkstück aufeinander abwälzen, so dass die gewünschten Fasen in einer oder mehreren Überrollungen erzeugt werden. Bevorzugt handelt es sich dabei um ein Umformverfahren.

In einer möglichen Ausführungsform berührt das Werkzeug dabei das Werkstück nur im Bereich der Fasen an den Zahnflanken. Bevorzugt wird dabei das Material im Bereich der zukünftigen Fasen in die Zahnflanke und in Richtung der Stirnflächen der Verzahnung verdrängt.

Bevorzugt ist dabei eine Steuerung vorgesehen, welche den Druck, mit welchem das Anfas- und / oder Entgratwerkzeug gegen das Werkstück gedrückt wird, und/oder den Verfahrweg des Aktors beim Anstellen an das Werkstück durch Ansteuerung des Aktors ansteuert. Bevorzugt ist der Druck und/oder der Verfahrweg über die Maschinensteuerung einstellbar, so dass in Abhängigkeit von der gewünschten Fasengröße mit unterschiedlich starkem Druck und/oder Verfahrweg gearbeitet werden kann.

Bevorzugt wird dabei erfindungsgemäß zum Zustellen des Anfas- und / oder Entgratwerkzeug ein erster Aktor eingesetzt, während für die Gegenkraftvorrichtung ein zweiter Aktor eingesetzt wird. Dies ermöglicht es, die Kompensationskraft unabhängig von der Bearbeitungskraft anzusteuern. Bevorzugt weist die Verzahnmaschine hierfür eine entsprechende Steuerung auf.

In einer bevorzugten Ausführungsform der vorliegenden Erfindung umfasst die Gegenkraftvorrichtung ein Anschlagelement, welches über den Aktor gegen einen Anschlagbereich des Maschinentisches und / oder der Werkstückspindel bewegt werden kann, um die Gegenkraft aufzubringen. Als Werkstückspindel im Sinne der vorliegenden Erfindung wird dabei nicht nur der Bereich der Werkstückspindel, welcher zum Aufspannen des Werkstücks dient, angesehen, sondern der gesamte rotierende Bereich der Werkstückaufnahme. Das erfindungsgemäße Anschlagelement kann damit entweder an einen rotierenden Bereich der Werkstückaufnahme anliegen, oder an einem Bereich des Maschinentisches, an welchem die Werkstückspindel gelagert ist.

Bevorzugt ist das Anschlagelement erfindungsgemäß durch den Aktor zumindest auch in radialer Richtung zur Rotationsachse der Werkstückaufnahme an den Maschinentisch und / oder die Werkstückspindel heranfahrbar. Bevorzugt ist dabei das Anschlagelement so angeordnet, dass in Bezug auf die Rotationsachse der Werkstückspindel dem Anfas- und / oder Entgratwerkzeug gegenüberliegend angeordnet ist, so dass die durch das Anfas- und / oder Entgratwerkzeug auf das Werkstück aufgebrachten Kräfte und die durch das Anschlagelement auf den Maschinentisch und / oder die Werkstückspindel aufgebrachten Kräfte in entgegengesetzte Richtungen wirken.

Bevorzugt greift das erfindungsgemäße Anschlagselement dabei an der Werkstückspindel an, d. h. an einem rotierenden Bereich der Werkstückaufnahme.

Ebenso wäre ein Kraftangriff am gemeinsamen Werkstückspindelträger, in der Nähe der Stelle an der das Anfas- und Entgratwerkzeug die Bearbeitungskräfte auf des Werkstück aufbringt, möglich.

In einer möglichen Ausführungsform handelt es sich bei dem Anschlagelement um ein Anschlagrad, welches mit einer ringförmigen Anschlagfläche der Werkstückspindel in Kontakt kommt und bei einer Rotation der Werkstückspindel auf dieser abläuft. Insbesondere kann das Anschlagrad dabei eine Drehachse aufweisen, welche parallel zur Rotationsachse der Werkstückspindel angeordnet ist.

In einer möglichen Ausführungsform der vorliegenden Erfindung ist die Werkzeugspindel für das Anfas- und / oder Entgratwerkzeug an einem Schwenkarm angeordnet, welcher über einen Hydraulikzylinder oder einen NC-Motor bewegbar ist. Weiterhin kann das Anschlagelement an einem Schwenkarm angeordnet sein, welcher über einen Hydraulikzylinder oder einen NC-Motor bewegbar ist.

Bevorzugt sind die beiden Schwenkarme dabei bezüglich der Rotationsachse der Werkstückspindel auf gegenüberliegenden Seiten angeordnet. Weiterhin bevorzugt weisen die beiden Schwenkarme dabei Schwenkachsen auf, welche parallel zueinander verlaufen. Weiterhin bevorzugt können die beiden Schwenkarme unabhängig voneinander bewegt werden.

Die erfindungsgemäße Verzahnmaschine kann in einer möglichen Ausführungsform eine zweite Werkzeugaufnahme für ein zweites Entgratwerkzeug aufweisen, welches an das Werkstück zustellbar ist. Insbesondere kann dieses Entgratwerkzeug dazu dienen, die bei der Anfas- und / oder Entgratbearbeitung durch das Anfas- und / oder Entgratwerkzeug entstehenden Grate zu entfernen, insbesondere abzuscheren. Insbesondere kann es sich dabei um Entgratscheiben handeln, welches Material, welches auf den Stirnseiten nach außen hin verdrängt wurde, abscheren. Bevorzugt kann es sich dabei um Feilscheiben handeln, welche über einen oder mehrere Antriebe in Rotation versetzt werden.

In einer möglichen Ausführungsform ist das zweite Entgratwerkzeug dabei über einen eigenen Aktor an das Werkstück zustellbar, beispielsweise über einen Schlitten oder einen Schwenkarm, welcher über einen Aktor wie beispielsweise einen Zylinder oder einen NC-Motor bewegt werden kann, um das zweite Entgratwerkzeug an das Werkstück zuzustellen.

In einer zweiten möglichen Ausführungsform ist das zweite Entgratwerkzeug dagegen über den Aktor der Gegenkraftvorrichtung bewegbar. Insbesondere können dabei die zweite Werkzeugaufnahme für das zweite Entgratwerkzeug und das Anschlagelement der Gegenkraftvorrichtung an einem gemeinsamen Lagerelement angeordnet sein, welches über den Aktor bewegbar ist. Insbesondere können die beiden Elemente dabei an einem gemeinsamen Schwenkarm angeordnet sein, über welchen sie durch Bewegungen des Aktors relativ zur Rotationsachse der Werkstückaufnahme bewegbar sind.

Durch diese Anordnung müssen für das zweite Entgratwerkzeug und das Anschlagelement in der Gegenkraftvorrichtung keine separaten Aktoren eingesetzt werden. Allerdings ist es von Vorteil, wenn die Position des Entgratwerkzeuges zumindest in gewissen Grenzen unabhängig von der Position des Anschlagelementes einstellbar ist.

Bevorzugt ist daher die Relativposition der zweiten Werkzeugaufnahme für das zweite Entgratwerkzeug und das Anschlagelement der Gegenkraftvorrichtung einstellbar, beispielsweise über einen anstellbaren Anschlag. Bevorzugt ist die Einstelleinrichtung dabei so ausgeführt, dass sie eine Veränderung der Relativposition der beiden Elemente in radialer Richtung in Bezug auf die Rotationsachse der Werkstückaufnahme erlaubt.

Die Verzahnmaschine gemäß der vorliegenden Erfindung kann weiterhin ein zweites Anschlagelement aufweisen, welches gegen den Maschinentisch und / oder die Werkstückspindel bewegt werden kann. Bevorzugt ist dabei ein Aktor vorgesehen, welcher diese Bewegung durchführt. Durch das zweite Anschlagelement kann die Position der Werkstückspindel und / oder des Maschinentisches noch besser stabilisiert werden, so dass die Einflüsse durch die Anfas- und / oder Entgratbearbeitung noch weiter reduziert werden können.

In einer möglichen Ausführungsform ist das zweite Anschlagelement dabei über den Aktor bewegbar, welcher auch das Anfas- und / oder Entgratwerkzeug bewegt. Insbesondere können dabei das zweite Anschlagelement und die Werkzeugaufnahme für das Anfas- und / oder Entgratwerkzeug an einem gemeinsamen Lagerelement, welches über den Aktor bewegbar ist, angeordnet sein. Insbesondere kann es sich dabei um einen Schwenkarm handeln, an welchem sowohl das zweite Anschlagelement, als auch die Werkzeugaufnahme für das Anfas- und / oder Entgratwerkzeug angeordnet sind. Bevorzugt kann es sich bei dem zweiten Anschlagelement dabei ebenfalls um ein Anschlagrad handeln, welches bevorzugt auf der gleichen Anschlagfläche der Werkstückspindel abrollt wie das erste Anschlagelement.

Weiterhin bevorzugt ist die Relativposition der Werkzeugaufnahme für das Anfas- und / oder Entgratwerkzeug und des zweiten Anschlagelementes einstellbar. Insbesondere ist dabei eine Einstellung in radialer Richtung zur Rotationsachse der Werkstückaufnahme möglich. Hierdurch kann durch eine entsprechende Veränderung der Relativposition zwischen dem zweiten Anschlagrad und der Werkstückaufnahme für das Anfas- und / oder Entgratwerkzeug die Größe der durch das Anfas- und / oder Entgratwerkzeug erzeugten Fase eingestellt werden.

Die vorliegende Erfindung kommt besonders bevorzugt bei einer Verzahnmaschine mit mindestens zwei Maschinentischen zum Einsatz, welche jeweils eine Werkstückspindel aufweisen, wobei die Maschinentische so verfahrbar sind, dass die an den Werkstückspindeln angeordneten Werkstücke abwechselnd in den Arbeitsbereich des Anfas- und / oder Entgratwerkzeuges verfahrbar sind.

Insbesondere können die mindestens zwei Maschinentische mit den Werkstückspindeln dabei an einem gemeinsamen Werkstückspindelträger angeordnet sein, und durch eine Bewegung des Werkstückspindelträgers bewegt werden. Insbesondere kann der Werkstückspindelträger dabei um eine Hauptachse verschwenkbar sein, wobei die Werkstückspindel durch Verschwenken des Werkstückspindelträgers abwechselnd in den Arbeitsbereich Anfas- und / oder Entgratwerkzeuges verfahrbar sind.

In einer bevorzugten Ausführungsform sind die Rotationsachsen der Werkstückspindel in einem bestimmten Winkel ≠ 0 zur Hauptachse des Werkstückspindelträgers angeordnet, d. h. nicht parallel zu dieser angeordnet. Dies erlaubt eine verbesserte Ausnutzung des vorhandenen Bauraumes und bewirkt eine bessere Möglichkeit für die Abschottung der beiden Werkstückspindeln voneinander. Insbesondere können die Rotationsachsen der Werkstückspindeln dabei in einer Ebene angeordnet sein, welche senkrecht auf der Hauptachse des Werkstückspindelträgers steht. Bevorzugt ist die Hauptachse des Werkstückspindelträgers dabei horizontal ausgerichtet.

Weiterhin bevorzugt kommt die vorliegende Erfindung bei einer Verzahnmaschine mit einer Hauptbearbeitungsstation zur Hauptbearbeitung eines in der Werkstückspindel angeordneten Werkstückes zum Einsatz. Insbesondere kann die Hauptbearbeitungsstation dabei eine Werkzeugaufnahme zur Aufnahme eines Hauptbearbeitungswerkzeuges und mehrere Maschinenachsen zur Erzeugung der zur Durchführung der Hauptarbeit notwendigen Bewegungen des Werkzeuges relativ zum Werkstück aufweisen. Insbesondere kann es sich bei der Hauptbearbeitung, welche an der Hauptbearbeitungsstation durchgeführt wird, dabei um ein Verzahnfräsen oder ein Verzahnstoßen handeln.

Bevorzugt kann die Werkstückspindel dabei von einer ersten Position, in welcher sie im Arbeitsbereich der Hauptbearbeitungsstation angeordnet ist, in eine zweite Position, in welcher sie in dem Arbeitsbereich des Anfas- und / oder Entgratwerkzeuges angeordnet ist, verfahren werden. Bevorzugt ist hierfür der Maschinentisch der Werkstückspindel entsprechend verfahrbar.

Weiterhin bevorzugt sind dabei mindestens zwei Maschinentische vorgesehen, an welchen jeweils eine Werkstückspindel angeordnet ist, wobei die Maschinentische so verfahrbar sind, dass die an den Werkstückspindeln angeordneten Werkstücke abwechselnd in den Arbeitsbereich des Anfas- und / oder Entgratwerkzeuges und in den Arbeitsbereich der Hauptbearbeitungsstation verfahrbar sind.

Wie bereits oben erläutert, sind die mindestens zwei Maschinentische mit den Werkstückspindeln dabei bevorzugt an einem gemeinsamen Werkstückspindelträger angeordnet. Bevorzugt ist der Werkstückspindelträger dabei um eine Hauptachse verschwenkbar, wobei die Werkstückspindeln durch Verschwenken des Werkstückträgers abwechselnd in den Arbeitsbereich des Anfas- und / oder Entgratwerkzeuges und der Hauptbearbeitungsstation verfahrbar sind. Bevorzugt ist der Aufbau des Werkstückspindelträgers und der Werkstückspindeln dabei so, wie dies bereits oben beschrieben wurde.

Weiterhin lässt sich auf einer erfindungsgemäßen Verzahnmaschine ein Bearbeitungsverfahren durchführen, bei welchem ein Werkstück, welches auf einer ersten Werkstückspindel angeordnet ist, an der Hauptbearbeitungsstation hauptbearbeitet wird, während gleichzeitig ein zweites Werkstück, welches an einer zweiten Werkstückaufnahme angeordnet ist, durch das Anfas- und / oder Entgratwerkzeug nebenbearbeitet wird.

Weiterhin bevorzugt werden die Werkstücke im Rahmen des Bearbeitungsverfahrens durch Verfahren der Maschinentische mit den Werkstückspindeln jeweils abwechselnd in den Bereich der Hauptbearbeitungsstation und des Anfas- und / oder Entgratwerkzeugs verfahren, so dass nacheinander an den Werkstücken zumindest eine Hauptbearbeitung und zumindest ein Anfas- und / oder Entgratprozess durchgeführt wird.

Weiterhin bevorzugt kann nach der Durchführung eines Anfas- und / oder Entgratprozesses eine Werkstückspindel mit einem entsprechend angefasten bzw. entgrateten Werkstück wieder zurück in den Bereich der Hauptbearbeitungsstation verfahren werden, wo eine Feinverzahnung durchgeführt wird.

Bevorzugt erfolgt dabei während der Durchführung der Feinverzahnung auf der anderen Werkstückspindel ein Anfas- und / oder Entgratprozess auf der anderen Werkstückspindel.

Weiterhin bevorzugt kann in einer anderen Ausführungsform die Durchführung der Feinverzahnung zeitlich vom Anfas- und/oder Entgratprozess entkoppelt werden um so die Feinverzahnung frei von anderen Prozesskräften auszuführen und so die Qualität der Verzahnung noch weiter zu verbessern.

Insbesondere kann das auf der erfindungsgemäßen Verzahnmaschine durchgeführte Bearbeitungsverfahren dabei die Schritte Grobverzahnen, Anfasen und / oder Entgraten, sowie Feinverzahnen umfassen. Weiterhin kann im Bereich der Hauptbearbeitungsstation und / oder im Bereich der Anfas- und / oder Entgratstation und / oder im Bereich einer dritten Station ein Be- und / oder Entladen der Werkstückspindeln erfolgen.

Bevorzugt weist die Verzahnmaschine gemäß der vorliegenden Erfindung dabei eine Maschinensteuerung auf, welche eines der oben beschriebenen Bearbeitungsverfahren auf der Verzahnmaschine durch Ansteuerung der entsprechenden Antriebe automatisiert durchführt.

Weiterhin bevorzugt weist die erfindungsgemäße Verzahnmaschine eine Maschinensteuerung auf, welche den Aktor zum Zustellen des Anfas- und / oder Entgratwerkzeuges und den Aktor der Gegenkraftvorrichtung so ansteuert, dass die Gegenkraftvorrichtung während eines durch das Anfas- und / oder Entgratwerkzeugs durchgeführten Anfas- und / oder Entgratprozesses eine Gegenkraft erzeugt, welche die durch die Zustellung des Entgratwerkzeuges an das Werkstück auf den Maschinentisch und / oder die Werkstückspindel wirkende Kraft zumindest teilweise ausgleicht.

Insbesondere kann dabei das Anschlagelement durch den Aktor gegen den Maschinentisch und / oder die Werkstückspindel gedrückt werden, während gleichzeitig das Anfas- und / oder Entgratwerkzeug gegen das Werkstück gedrückt wird.

Bevorzugt erfolgt die Ansteuerung dabei so, dass die Kräfte, welche durch die beiden Aktoren auf das Werkstück bzw. den Maschinentisch und / oder die Werkstückspindel aufgebracht werden, in einem vorgegebenen Verhältnis zueinander stehen. Die Ansteuerung erfolgt damit koordiniert. Bevorzugt stehen die Kräfte dabei in einem linearen Verhältnis.

Weiterhin bevorzugt werden die Aktoren durch die Maschinensteuerung dabei so angesteuert, dass die durch die beiden Aktoren auf das Werkstück bzw. den Maschinentisch und / oder die Werkstückspindel aufgebrachten Kräfte einander aufheben. Insbesondere kann dies in der Art erfolgen, dass das durch die beiden Aktoren erzeugte Drehmoment relativ zu einer Hauptachse eines Werkstückspindelträgers, an welchem der Maschinentisch mit der Werkstückspindel angeordnet ist, entgegengesetzt und betragsmäßig gleich groß ist.

Sind mehrere Anschlagselemente vorgesehen, erfolgt die Ansteuerung dabei bevorzugt so, dass sich die Kräfte bzw. Momente auf den Werkstückspindelträger und / oder den Maschinentisch sich insgesamt gegenseitig aufheben.

Die vorliegende Erfindung umfasst weiterhin eine Anfas- und/oder Entgratvorrichtung mit einer Werkzeugaufnahme für ein Anfas- und/oder Entgratwerkzeug zum Anfasen und/oder Entgraten eines in einer Werkstückspindel aufgenommenen vorverzahnten Werkstückes, wobei das Anfas- und/oder Entgratwerkzeug über mindestens einen Aktor an das Werkstück zustellbar ist. Erfindungsgemäß umfasst die Anfas- und/oder Entgratvorrichtung weiterhin eine Gegenkraftvorrichtung, welche an einem der Maschinentische und/oder an einer der Werkstückspindel angreift und über mindestens einem Aktor eine Gegenkraft erzeugt, welche die durch die Zustellung des Entgratwerkzeuges an das Werkstück auf den Maschinentisch und/oder die Werkstückspindel wirkende Kraft zumindest teilweise ausgleicht.

Bevorzugt ist die Anfas- und/oder Entgratvorrichtung dabei so aufgebaut, wie dies bereits oben im Hinblick auf die Verzahnmaschine näher erläutert wurde. Weiterhin kann es sich bei der Anfas- und/oder Entgratvorrichtung um eine Baueinheit handeln, welches als ganzes an einer Verzahnmaschine montierbar ist. Bevorzugt sind dabei die Werkzeugaufnahme für das Anfas- und/oder Entgratwerkzeug und die Gegenkraftvorrichtung an einem gemeinsamen Trägerelement angeordnet.

Die vorliegende Erfindung umfasst neben einer erfindungsgemäßen Verzahnmaschine weiterhin eine Gegenkraftvorrichtung für eine solche Verzahnmaschine. Insbesondere weist die Gegenkraftvorrichtung dabei einen Aktor auf, durch welchen eine Gegenkraft auf den Maschinentisch und / oder Werkstückspindel aufgebracht werden kann. Weiterhin bevorzugt weist die Gegenkraftvorrichtung dabei ein Anschlagelement, insbesondere ein Anschlagrad auf, welches durch den Aktor gegen den Maschinentisch und / oder die Werkstückspindel bewegt werden kann.

Bevorzugt ist die Gegenkraftvorrichtung dabei so aufgebaut, wie dies bereits oben näher dargestellt wurde.

Die vorliegende Erfindung umfasst weiterhin ein Verfahren zum Betreiben einer Verzahnmaschine mit mindestens einem Maschinentisch, an welchem ein vorverzahntes Werkstück in einer Werkstückspindel aufgenommen ist, wobei ein Anfasund / oder Entgratwerkzeug zum Anfasen- und / oder Entgraten an das Werkstück zugestellt wird. Erfindungsgemäß ist dabei vorgesehen, dass auf den Maschinentisch und / oder die Werkstückspindel eine Gegenkraft aufgebracht wird, welche die durch die Zustellung des Entgratwerkzeuges an das Werkstück auf den Maschinentisch und / oder die Werkstückspindel wirkende Kraft zumindest teilweise ausgleicht.

Erfindungsgemäß wird damit eine Gegenkraft unmittelbar auf den Maschinentisch und / oder die Werkstückspindel, welche das Werkstück trägt, aufgebracht. Auf ein zweites Anfas- und / oder Entgratwerkzeug, welches eine solche Gegenkraft auf das Werkstück selbst aufbringen würde, kann hierdurch verzichtet werden. Bevorzugt wird dabei die Gegenkraft, welche auf den Maschinentisch und / oder die Werkstückspindel aufgebracht wird, separat zu der Kraft, mit welcher das Anfas- und / oder Entgratwerkzeug auf das Werkstück gedrückt wird, eingestellt und / oder angesteuert.

Bevorzugt wird das erfindungsgemäße Verfahren dabei so durchgeführt, wie dies bereits oben im Hinblick auf die erfindungsgemäße Verzahnmaschine näher dargestellt wurde. Weiterhin wird das erfindungsgemäße Verfahren bevorzugt im Rahmen eines Bearbeitungsverfahrens, wie es oben dargestellt ist, durchgeführt.

Weiterhin bevorzugt dient das erfindungsgemäße Verfahren dabei dem Betrieb einer Verzahnmaschine, wie sie bereits oben dargestellt wurde.

Die vorliegende Erfindung wird nun anhand von Ausführungsbeispielen sowie Figuren näher dargestellt.

Dabei zeigen:
- Fig. 1a:: ein Ausführungsbeispiel einer Verzahnmaschine gemäß der vorliegenden Erfindung,
- Fig. 1b:: eine Detailansicht des in Fig. 1a gezeigten Ausführungsbeispiels einer erfindungsgemäßen Verzahnmaschine,
- Fig. 2a:: eine perspektivische Ansicht eines ersten Ausführungsbeispiels einer erfindungsgemäßen Anfas- und / oder Entgratvorrichtung, wie sie bei dem in Fig. 1a und 1b gezeigten Ausführungsbeispielen einer erfindungsgemäßen Verzahnmaschine zum Einsatz kommt,
- Fig. 2b:: eine Frontalansicht des in Fig. 2a gezeigten Ausführungsbeispiels,
- Fig. 3a:: eine perspektivische Ansicht eines zweiten Ausführungsbeispiels einer erfindungsgemäßen Anfas- und / oder Entgratvorrichtung, bei welcher ein zweites Anschlagrad zum Einsatz kommt,
- Fig. 3b:: eine Frontalansicht des in Fig. 3a gezeigten Ausführungsbeispiels,
- Fig. 4a:: eine perspektivische Ansicht eines dritten Ausführungsbeispiels einer erfindungsgemäßen Anfas- und / oder Entgratvorrichtung, bei welcher ein weiteres Entgratwerkzeug gemeinsam mit einem Anschlagelement der Gegenkraftvorrichtung bewegbar ist, und
- Fig. 4b:: eine Frontalansicht des in Fig. 4a gezeigten Ausführungsbeispiels.

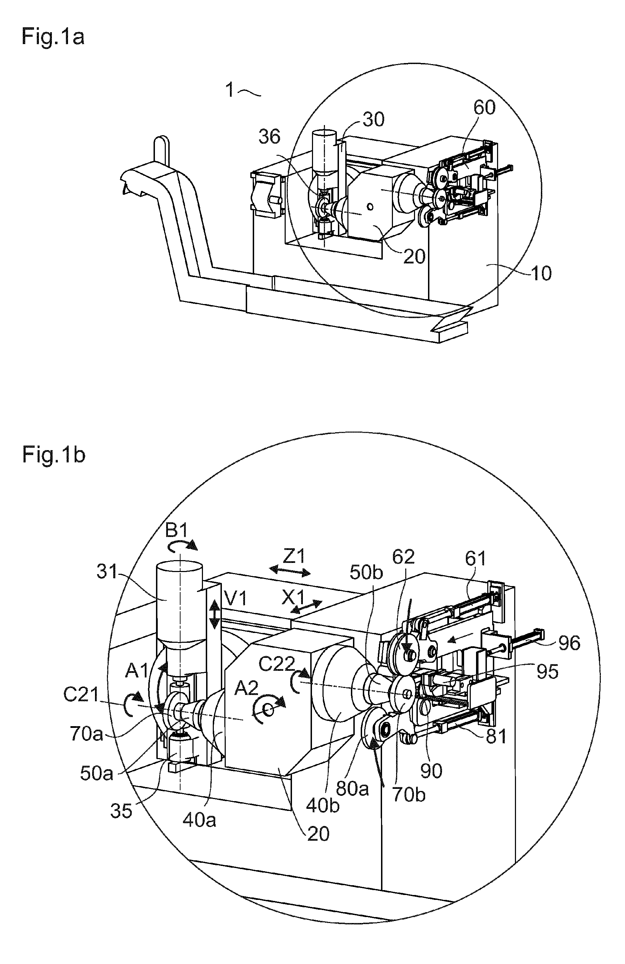

In Fig. 1 a und 1 b ist ein Ausführungsbeispiel einer erfindungsgemäßen Verzahnmaschine 1 gezeigt, bei welcher eine erfindungsgemäße Anfas- und / oder Entgratvorrichtung mit einer erfindungsgemäßen Gegenkraftvorrichtung zum Einsatz kommt.

Die Verzahnmaschine weist dabei zwei Maschinentische 40a und 40b auf, an welchen jeweils eine Werkstückspindel 50a bzw. 50b um eine Rotationsachse C21 bzw. C22 drehbar und antreibbar gelagert sind. Die beiden Maschinentische 40a und 40b sind dabei an einem Werkstückspindelträger 20 angeordnet, welcher um eine Hauptschwenkachse A2 schwenkbar ist. Im Ausführungsbeispiel liegen dabei die beiden Rotationsachsen C21 und C22 der Werkstückspindeln 50a und 50b in einer Ebene, welche senkrecht auf der Hauptschwenkachse A2 des Werkstückspindelträgers 20 steht. Die beiden Werkstückspindeln 50a und 50b sind dabei auf gegenüberliegenden Seiten des Werkstückspindelträgers 20 angeordnet.

Im Ausführungsbeispiel verlaufen die Rotationsachsen C21 und C22 der beiden Werkstückspindeln parallel zueinander. Die Hauptschwenkachse A2 ist dabei im Ausführungsbeispiel horizontal angeordnet, und auch die Rotationsachsen C21 und C22 der Werkstückspindeln sind in den jeweiligen Bearbeitungspositionen horizontal ausgerichtet.

Die Verzahnmaschine weist weiterhin eine Hauptbearbeitungsstation 30 sowie als Nebenbearbeitungsstation die Anfas- und / oder Entgratvorrichtung 60 auf. Durch ein Verschwenken des Werkstückspindelträgers 20 können dabei die an den Werkstückspindeln angeordneten Werkstücke abwechselnd von dem Arbeitsbereich der Hauptbearbeitungsstation 30 in den Arbeitsbereich der Anfas- und / oder Entgratvorrichtung 60 verfahren werden und umgekehrt.

Im Ausführungsbeispiel ist die Hauptbearbeitungsstation 30 als ein Fräskopf ausgestaltet. Der Bearbeitungskopf weist dabei zunächst eine Werkzeugaufnahme 36 mit einem Gegenhalter 35 auf, in welcher ein Werkzeug, insbesondere ein Fräswerkzeug, aufgenommen und um eine Rotationsachse B1 angetrieben werden kann. Weiterhin sind Maschinenachsen vorgesehen, um die zur Durchführung einer Verzahnbearbeitung notwendigen Bewegungen durchzuführen. Im Ausführungsbeispiel kann der Bearbeitungskopf dabei um eine Schwenkachse A1 verschwenkt werden, sowie um eine Schiftachse V1 verschifftet werden. Weiterhin ist eine Linearachse X1 vorgesehen, über welche das Werkzeug an das Werkstück zugestellt werden kann, sowie eine Z1-Achse, über welche das Werkzeug in Breitenrichtung des Werkstückes, d. h. parallel zur Rotationsachse C21, verfahren werden kann.

Alternativ könnte an der Hauptbearbeitungsstation jedoch beispielsweise auch ein Verzahnstoßprozess durchgeführt werden, wofür ein entsprechender Verzahnstoßkopf vorgesehen werden müsste.

Ein an der Hauptbearbeitungsstation vorverzahntes Werkstück kann nun durch ein Verschwenken des Werkstückspindelträgers 20 in den Arbeitsbereich der erfindungsgemäßen Anfas- und / oder Entgratvorrichtung verfahren werden, wo die bei der Vorverzahnung entstandenen Grate entfernt und / oder die Zahnradkanten mit Fasen versehen werden.

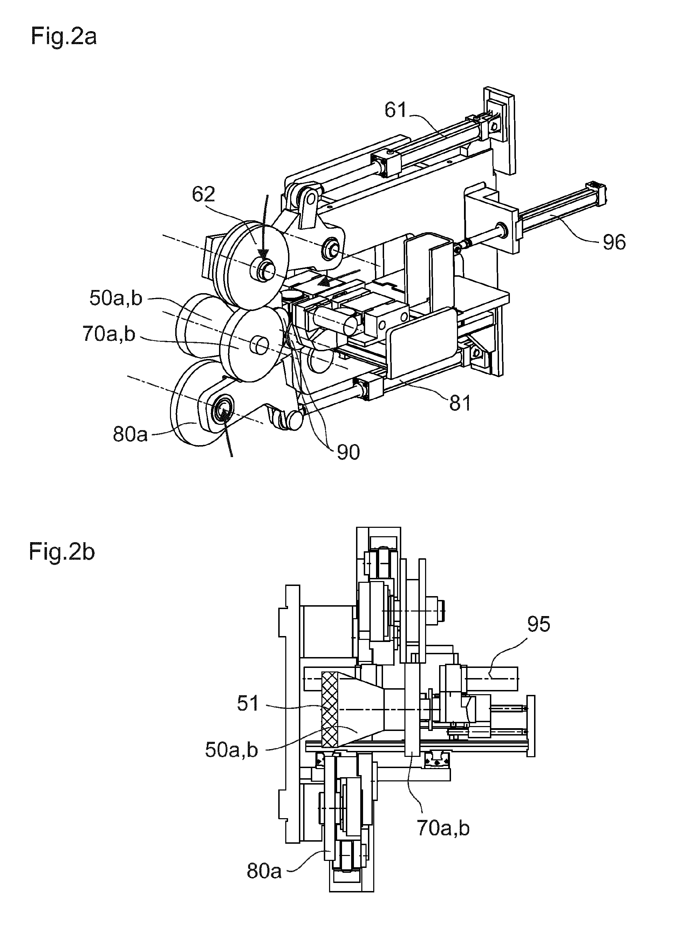

Der grundsätzliche Aufbau einer erfindungsgemäßen Anfas- und / oder Entgratvorrichtung, welcher den in Fig. 2 bis 4 gezeigten drei Ausführungsbeispielen gemeinsam ist, soll nun im Folgenden dargestellt werden:
Die Anfas- und / oder Entgratvorrichtung weist ein Anfas- und / oder Entgratwerkzeug 62 auf, welches über einen Aktor 61 gegen das Werkstück 70b, welches sich im Bereich der Anfas- und / oder Entgratvorrichtung befindet, gedrückt werden kann. Im Ausführungsbeispiel handelt es sich dabei um ein Wälzentgratwerkzeug 62, welches mittels eines Umformverfahrens Fasen an den Zahnkanten der damit bearbeiteten Werkstücke erzeugt. In der in den Figuren dargestellten Ausführungsform berührt das Werkzeug das Werkstück dabei nur im Bereich der Zahnkanten an den Zahnflanken. Durch den Umformprozess wird das Material im Bereich der zukünftigen Fase in die Zahnflanke und in Richtung der Stirnflächen der Verzahnung verdrängt.

Das Wälzentgratwerkzeug 62 wird radial über den Aktor 61 an das Werkstück gedrückt und wälzt auf dem Werkstück ab. Hierzu ist das Wälzentgratwerkzeug 62 auf einer Werkzeugspindel angeordnet, welche eine Rotationsachse aufweist und welche bedarfsweise über einen Antrieb angetrieben werden kann.

Im Ausführungsbeispiel ist das Wälzentgratwerkzeug 62 dabei auf einem Schwenkhebel angeordnet, welcher durch den als Hydraulikzylinder ausgeführten Aktor 61 in einer Ebene senkrecht zur Drehachse 22 der Werkstückspindel verschwenkt werden kann. Durch ein Verschwenken des Schwenkarms kann das Wälzentgratwerkzeug damit radial gegen das Werkstück 70b gepresst werden.

Die durch das Anpressen des Anfas- und / oder Entgratwerkzeuges 62 bewirkte Druckkraft, welche auf das Werkstück 70a, b wirkt, wird über die Werkstückspindel 50b auf den Maschinentisch 40b und damit auf den gesamten Spindelträger übertragen, so dass diese auch die zweite Werkstückspindel 50a beeinflussen würde, an welcher gerade ein Hauptbearbeitungsprozess durchgeführt wird, insbesondere mittels des Verzahnwerkzeugs 36 eine Verzahnung erzeugt bzw. nachverzahnt wird. Handelt es sich dabei um einen Grobverzahnungsprozess, bei welchem die Verzahnung erzeugt wird, und ist ein weiterer Nachverzahnungsprozess geplant, ist dieser Einfluss nicht weiter problematisch, da das qualitätsbestimmende Verzahnergebnis erst im zweiten Schritt, d. h. im Nachverzahnen, erzeugt wird. Durch eine zeitliche Entkopplung des Nachverzahnungsprozesses vom Anfas- und Entgratprozess kann die Verzahnungsqulität noch weiter gesteigert werden.

Wird jedoch gerade auf der zweiten Spindel 50a das Werkstück nachverzahnt oder ist nur ein Erzeugungsschritt geplant, kann sich die Verformung des Spindelträgers 20 und der Maschinentische 40 negativ auf das Verzahnergebnis auswirken.

Um dies zu verhindern, wird gemäß der vorliegenden Erfindung die auf die Werkstückspindel 50b bzw. den Maschinentisch 40b wirkende Druckkraft über ein Anschlagsrad 80a aufgefangen, welches sich an der Werkstückspindel 50b auf einer hierfür vorgesehenen Fläche 51 abstützt. Angedrückt wird das Anschlagrad dabei über einen Aktor 81, welcher eine entsprechende Gegenkraft erzeugt.

Im Ausführungsbeispiel ist das Anschlagrad 80a dabei ebenfalls auf einem Schwenkarm angeordnet, welcher durch den als Hydraulikzylinder 81 ausgeführten Aktor in einer Ebene senkrecht zur Rotationsachse der Werkstückspindel bewegt werden kann. Hierdurch kann das Anschlagrad 80a radial gegen die Werkstückspindel 50b gepresst werden. Im Ausführungsbeispiel sind das Anfas- und / oder Entgratwerkzeug 62 und das Anschlagrad 80a dabei so ausgeführt, dass sie auf jeweils gegenüberliegenden Seiten bezüglich der Rotationsachse an dem Werkstück bzw. an der Werkstückspindel angreifen. Das Anschlagrad 80a ist dabei an dem Schwenkarm, über welchen es bewegt wird, drehbar gelagert und rollt daher auf der Gegenauflagefläche 51 der Werkstückspindel ab.

Im Ausführungsbeispiel sind die beiden Schwenkarme, über welche das Anfas- und / oder Entgratwerkzeug 62 sowie das Anschlagrad 80a angeordnet sind, an einer gemeinsamen Trägeranordnung angelenkt. Hierdurch ergibt sich eine kompakte Baugruppe, welche an einer Verzahnmaschine angeordnet und insbesondere auch nachgerüstet werden kann.

Weiterhin sind in den dargestellten Ausführungsbeispielen Entgratwerkzeuge 90 vorgesehen, über welche Fasenmaterial, welches aus den Fasen der Verzahnung auf deren Stirnseite nach außen hin verdrängt wird, abgeschert werden kann. Die Entgratwerkzeuge 90 liegen dabei links und rechts oder nur einseitig am Werkstück an. Falls diese Entgratwerkzeuge als angetriebene Feilscheiben ausgeführt sind, können diese über entsprechende Antriebe 95 drehangetrieben werden.

Gemäß dem in Fig. 2a und 2b gezeigten ersten Ausführungsbeispiel werden die Entgratwerkzeuge 90 dabei auf einem Schlitten von hinten in Richtung auf das Werkstück bewegt, wofür im Ausführungsbeispiel ein Zylinder 96 vorgesehen ist.

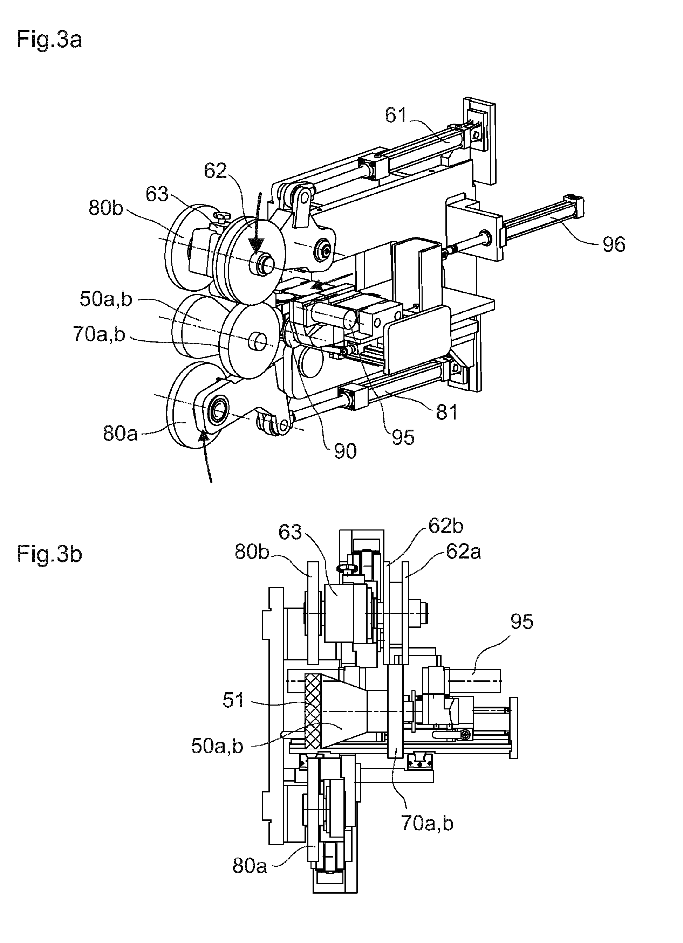

Bei dem in Fig. 3a und 3b gezeigten zweiten Ausführungsbeispiel ist zusätzlich zu dem im ersten Ausführungsbeispiel vorgesehenen Anschlagrad 80a ein zweites Anschlagrad 80b vorgesehen, so dass die zwei Anschlagräder 80a und 80b von gegenüberliegenden Seiten auf die Abstützfläche 50 an der Werkstückspindel 50b einwirken und so die Kräfte, welche durch den Anfasprozess erzeugt werden, aufnehmen.

Das zusätzliche Anschlagrad 80b ist dabei an dem gleichen Schwenkarm, an welchem auch das Anfas- und / oder Entgratwerkzeug 62 angeordnet ist, gelagert. Das Anschlagrad 80b und das Anfas- und / oder Entgratwerkzeug 62 werden damit gemeinsam über den Aktor 61 an die Werkstückspindel bzw. das Werkstück angedrückt. Die Fasengröße wird dabei durch einen einstellbaren Anschlag 63 bestimmt, welcher die relative Ausrichtung des Anschlagrades 80b zum Anfas- und / oder Entgratwerkzeug 62 bestimmt.

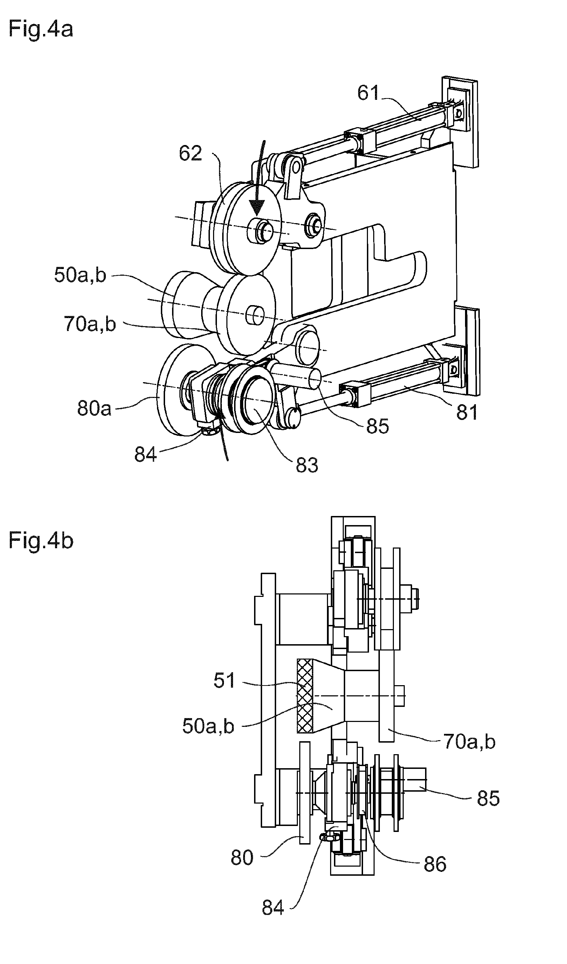

Bei der in Fig. 4a und 4b gezeigten dritten Ausführungsform entfällt die lineare Zustelleinrichtung für das Entgratwerkzeug 83. Hierfür wird das Entgratwerkzeug 83 auf dem Schwenkarm montiert, auf welchem auch das Anschlagrad 80a angeordnet ist. Auch in diesem Fall kann das Entgratwerkzeug 63 über einen Motor 85 drehangetrieben werden. Im Ausführungsbeispiel wirkt dieser mittels eines Antriebsriemens 86 auf die Werkzeugsachse und dreht das Entgratwerkzeug 83.

Auch hier wird über einen einstellbaren Anschlag 84 der Zustellweg für das Entgratwerkzeug begrenzt, da sich auf dem Schwenkarm gleichzeitig auch noch das Anschlagrad 80 befindet. Hierdurch kann die Position des Entgratwerkzeuges 83 relativ zu dem Anschlagrad 80 in gewissen Grenzen eingestellt werden.

Die vorliegende Erfindung ermöglicht dabei unabhängig von der konkreten Ausgestaltung der Gegenkraftvorrichtung die Kompensation einer einseitigen Druckkraft auf das Werkstück, ohne dass hierfür ein zweites Wälzentgratwerkzeug eingesetzt werden müsste, wobei es zudem möglich ist, durch entsprechende Ansteuerung der jeweiligen Aktoren die Kompensationskraft unabhängig von den Bearbeitungskräften zu steuern.

Durch die seitliche Anordnung der Anschlagräder, in Bezug auf die Entgratwerkzeuge, liegt deren Krafteinwirkungsstelle außerhalb des schwerkraftbedingten Späneflugbereiches.

Die Vorrichtung gemäß der vorliegenden Erfindung weist dabei bevorzugt eine Maschinensteuerung auf, welche die oben dargestellten Bearbeitungsverfahren automatisch durchführt. Vorteilhafterweise werden dabei automatisch auch die Aktoren für das Entgratwerkzeug und das Anschlagrad synchron angesteuert, um die auf den Werkzeugspindelträger 20 wirkenden Momente zu minimieren.

Anstelle der im Ausführungsbeispiel dargestellten Hydraulikzylinder können dabei selbstverständlich auch beliebige andere Aktoren eingesetzt werden, wie beispielsweise NC gesteuerte Motoren, die auf eine lineare Zustellachse wirken, oder die die Schwenkarme direkt antreiben.

## Patentansprüche

1. Verzahnmaschine mit mindestens einem Maschinentisch, an welchem eine Werkstückspindel zur Aufnahme eines Werkstückes angeordnet ist, wobei die Werkstückspindel über einen Antrieb um eine Rotationsachse antreibbar ist, und mit einer Werkzeugaufnahme für ein Anfas- und/oder Entgratwerkzeug zum Anfasen und/oder Entgraten eines in der Werkstückspindel aufgenommenen vorverzahnten Werkstückes, wobei das Anfas- und/oder Entgratwerkzeug über mindestens einen Aktor der Verzahnmaschine an das Werkstück zustellbar ist,
**gekennzeichnet durch**
eine Gegenkraftvorrichtung, welche an dem Maschinentisch und/oder der Werkstückspindel angreift und über mindestens einem Aktor eine Gegenkraft erzeugt, welche die **durch** die Zustellung des Entgratwerkzeuges an das Werkstück auf dem Maschinentisch und/oder die Werkstückspindel wirkende Kraft zumindest teilweise ausgleicht.

2. Verzahnmaschine nach Anspruch 1, wobei es sich bei dem Anfas- und/oder Entgratwerkzeug um ein Werkzeug handelt, welches zumindest auch durch Materialumformung wirkt, und/ oder wobei es sich bei dem Anfas- und/oder Entgratwerkzeug um ein Wälzentgratwerkzeug handelt und/oder wobei das Anfas- und/oder Entgratwerkzeug durch den Aktor zumindest auch in radialer Richtung zur Rotationsachse der Werkstückaufnahme an das Werkstück heranfahrbar und/oder gegen das Werkstück drückbar ist.

3. Verzahnmaschine nach Anspruch 1 oder 2, wobei zum Zustellen des Anfas- und/oder Entgratwerkzeug und für die Gegenkraftvorrichtung ein erster Aktor eingesetzt wird.

4. Verzahnmaschine nach Anspruch 1 oder 2, wobei zum Zustellen des Anfas- und/oder Entgratwerkzeug ein erster Aktor eingesetzt wird, und für die Gegenkraftvorrichtung ein zweiter Aktor.

5. Verzahnmaschine nach einem der vorangegangenen Ansprüche, wobei die Gegenkraftvorrichtung ein Anschlagelement aufweist, welches über den Aktor gegen einen Anschlagbereich des Maschinentisches und/oder der Werkstückspindel bewegt werden kann, um die Gegenkraft aufzubringen, wobei das Anschlagselement vorteilhafterweise durch den Aktor zumindest auch in radialer Richtung zur Rotationsachse der Werkstückaufnahme an den Maschinentisch und/oder die Werkstückspindel heranfahrbar ist.

6. Verzahnmaschine nach einem der vorangegangenen Ansprüche, wobei es sich bei es sich bei dem Anschlagelement um ein Anschlagrad handelt, welches mit einer ringförmigen Anschlagfläche der Werkstückspindel in Kontakt kommt und bei einer Rotation der Werkstückspindel auf dieser abläuft.

7. Verzahnmaschine nach einem der vorangegangenen Ansprüche, wobei das Anfas- und/oder Entgratwerkzeug an einem Schwenkarm angeordnet ist, welcher über einen Aktor insbesondere einen Hydraulikzylinder oder eine NC-Achse bewegbar ist, und/oder wobei das Anschlagelement an einem Schwenkarm angeordnet ist, welcher über einen Aktor insbesondere über einen Hydraulikzylinder oder eine NC-Achse bewegbar ist.

8. Verzahnmaschine nach einem der vorangegangenen Ansprüche, mit einer zweiten Werkzeugaufnahme für ein zweites Entgratwerkzeug, welches an das Werkstück zustellbar ist, wobei bevorzugt das zweite Entgratwerkzeug über einen eigenen Aktor oder über den Aktor der Gegenkraftvorrichtung bewegbar ist, wobei die zweite Werkzeugaufnahme für das zweite Entgratwerkzeug und das Anschlagelement der Gegenkraftvorrichtung bevorzugt an einem gemeinsamen Lagerelement, welches über den Aktor bewegbar ist, angeordnet sind, insbesondere an einem gemeinsamen Schwenkarm, wobei die Relativposition der zweiten Werkzeugaufnahme für das zweite Entgratwerkzeug und des Anschlagelements der Gegenkraftvorrichtung weiterhin bevorzugt einstellbar ist, insbesondere in radialer Richtung zur Rotationsachse der Werkstückaufnahme.

9. Verzahnmaschine nach einem der vorangegangenen Ansprüche, mit einem zweiten Anschlagelement, welches gegen den Maschinentisch und/oder die Werkstückspindel bewegt werden kann, wobei bevorzugt das zweite Anschlagselement über den Aktor bewegbar ist, welcher auch das Anfas- und/oder Entgratwerkzeug bewegt, wobei das zweite Anschlagelement und die Werkzeugaufnahme für das Anfas- und/oder Entgratwerkzeug bevorzugt an einem gemeinsamen Lagerelement, welches über den Aktor bewegbar ist, angeordnet sind, insbesondere an einem gemeinsamen Schwenkarm, wobei die Relativposition der Werkzeugaufnahme für das Anfas- und/oder Entgratwerkzeug und des zweiten Anschlagelements weiterhin bevorzugt einstellbar ist, insbesondere in radialer Richtung zur Rotationsachse der Werkstückaufnahme.

10. Verzahnmaschine nach einem der vorangegangenen Ansprüche, mit mindestens zwei Maschinentischen mit einer Werkstückspindel, wobei die Maschinentische so verfahrbar sind, dass die an den Werkstückspindeln angeordneten Werkstücke abwechselnd in den Arbeitsbereich des Anfas- und/oder Entgratwerkzeuges verfahrbar sind, wobei die mindestens zwei Maschinentische mit den Werkstückspindeln bevorzugt an einem gemeinsamen Werkstückspindelträger angeordnet sind, wobei der Werkstückspindelträger bevorzugt um eine Hauptachse verschwenkbar ist, wobei die Werkstückspindeln durch Verschwenken des Werkstückspindelträgers abwechselnd in den Arbeitsbereich des Anfas- und/oder Entgratwerkzeuges verfahrbar sind, wobei weiterhin bevorzugt die Rotationsachsen der Werkstückspindeln in einem bestimmten Winkel ungleich Null zur Hauptachse des Werkstückspindelträgers angeordnet ist, und insbesondere die Rotationsachsen der Werkstückspindeln in einer Ebene angeordnet sind, welche senkrecht auf der Hauptachse des Werkstückspindelträgers steht.

11. Verzahnmaschine nach einem der vorangegangenen Ansprüche, mit einer Hauptbearbeitungsstation zur Hauptbearbeitung eines in der Werkstückspindel angeordneten Werkstückes, wobei die Hauptbearbeitungsstation insbesondere eine Werkzeugaufnahme zur Aufnahme eines Hauptbearbeitungswerkzeuges und mehrere Maschinenachsen zur Erzeugung der zur Durchführung der Hauptbearbeitung notwenigen Bewegungen des Werkzeuges relativ zum Werkstück aufweist, wobei die Hauptbearbeitung insbesondere durch Verzahnfräsen oder Verzahnstoßen erfolgt,
wobei die Werkstückspindel bevorzugt von einer ersten Position, in welcher sie im Arbeitsbereich der Hauptbearbeitungsstation angeordnet ist, in eine zweite Position, in welcher sie in dem Arbeitsbereich des Anfas- und/oder Entgratwerkzeuges angeordnet ist, verfahrbar ist,
wobei weiterhin bevorzugt mindestens zwei Maschinentischen mit einer Werkstückspindel vorgesehen sind, wobei die Maschinentische so verfahrbar sind, dass die an den Werkstückspindeln angeordneten Werkstücke abwechselnd in den Arbeitsbereich des Anfas- und/oder Entgratwerkzeuges und der Hauptbearbeitungsstation verfahrbar sind, wobei die mindestens zwei Maschinentische mit den Werkstückspindeln bevorzugt an einem gemeinsamen Werkstückspindelträger angeordnet sind, wobei der Werkstückspindelträger bevorzugt um eine Hauptachse verschwenkbar ist, wobei die Werkstückspindeln durch Verschwenken des Werkstückspindelträgers abwechselnd in den Arbeitsbereich des Anfas- und/oder Entgratwerkzeuges und der Hauptbearbeitungsstation verfahrbar sind.

12. Verzahnmaschine nach einem der vorangegangenen Ansprüche, mit einer Maschinensteuerung, welche den Aktor zum Zustellen des Anfas- und/oder Entgratwerkzeugs und den Aktor der Gegenkraftvorrichtung so ansteuert, dass die Gegenkraftvorrichtung während eines durch das Anfas- und/oder Entgratwerkzeugs durchgeführten Anfas- und/oder Entgratprozesses eine Gegenkraft erzeugt, welche die durch die Zustellung des Entgratwerkzeuges an das Werkstück auf den Maschinentisch und/oder die Werkstückspindel wirkende Kraft zumindest teilweise ausgleicht, wobei die Steuerung die Aktoren bevorzugt so ansteuert, dass die durch die beiden Aktoren auf das Werkstück bzw. den Maschinentisch und/oder die Werkstückspindel aufgebrachten Kräfte in einem vorgegebenen, bevorzugt linearen Verhältnis zueinander stehen, wobei die Aktoren bevorzugt so angesteuert werden, dass die durch die beiden Aktoren auf das Werkstück bzw. den Maschinentisch und/oder die Werkstückspindel aufgebrachten Kräfte einander aufheben, insbesondere in der Art, dass das durch die beiden Aktoren erzeugte Drehmoment relativ zu einer Hauptachse eines Werkstückspindelträgers, an welchem der Maschinentisch mit der Werkstückspindel angeordnet ist, entgegengesetzt und betragsmäßig gleich groß sind.

13. Anfas- und/oder Entgratvorrichtung insbesondere für eine Verzahnmaschine nach einem der vorangegangenen Ansprüche, mit einer Werkzeugaufnahme für ein Anfas- und/oder Entgratwerkzeug zum Anfasen und/oder Entgraten eines in einer Werkstückspindel aufgenommenen vorverzahnten Werkstückes, wobei das Anfas- und/oder Entgratwerkzeug über mindestens einen Aktor an das Werkstück zustellbar ist,
**gekennzeichnet durch**
eine Gegenkraftvorrichtung, welche an einen Maschinentisch der Werkstückspindel und/oder an die Werkstückspindel angreift und über mindestens einem Aktor eine Gegenkraft erzeugt, welche die **durch** die Zustellung des Entgratwerkzeuges an das Werkstück auf den Maschinentisch und/oder die Werkstückspindel wirkende Kraft zumindest teilweise ausgleicht.

14. Gegenkraftvorrichtung für eine Verzahnmaschine nach einem der vorangegangenen Ansprüche.

15. Verfahren zum Betreiben einer Verzahnmaschine mit mindestens einem Maschinentisch, an welchem ein vorverzahntes Werkstück in einer Werkstückspindel aufgenommen ist, insbesondere zum Betrieb einer Verzahnmaschine nach einem der vorangegangenen Ansprüche, wobei ein Anfas- und/oder Entgratwerkzeug zum Anfasen und/oder Entgraten an das Werkstück zugestellt wird,
**dadurch gekennzeichnet,**
**dass** auf den Maschinentisch und/oder die Werkstückspindel eine Gegenkraft aufgebracht wird, welche die durch die Zustellung des Entgratwerkzeuges an das Werkstück auf den Maschinentisch und/oder die Werkstückspindel wirkende Kraft zumindest teilweise ausgleicht.
